# EUROPEAN PATENT SPECIFICATION

(11) **EP 1 348 340 B1**
(45) Date of publication and mention of the grant of the patent: **27.09.2006**
(21) Application number: 02007101.5
(22) Date of filing: 28.03.2002
(51) Int. Cl.: A23C 9/133

(54) **Dairy product with stripes or coating**
Milchprodukt mit Streifen oder einer Ummantelung
Produit laitier avec des bandes ou de revêtement

(43) Date of publication of application: 01.10.2003
(73) Proprietor: SOCIETE DES PRODUITS NESTLE S.A., 1800 Vevey (CH)
(72) Inventor: Bourguignon, Michel, 14740 Lasson (FR); Laine, Emmanuel, 14100 Lisleux (FR)
(74) Representative: Chautard, Cécile

(56) References cited:
- EP-A- 0 800 769
- EP-A- 0 853 888
- EP-A- 0 928 560
- WO-A-02/00029
- CH-A- 249 359
- DE-A- 10 126 408
- DE-U- 20 107 374

## Description

The present invention relates to a dairy product in a pot comprising a dairy and a non-dairy base, as well as to a process for obtaining a dairy product.

### The Background Art

The art of filling chilled dairy products or also ice-cream in order to obtain a consumable entity, for example a pot or a cone, mainly deals with the concern of obtaining a product which is ready for consumption and which at the same time provides an optimal serving size. The filling methods become more and more sophisticated if different alimentary bases are filled at the same time into a single serving and if particular visual aspects are strove for.

For example, FR 2708563 discloses a dosing unit, which allows simultaneous but independent dosing of different alimentary bases into a single container. In spite of this advantage, this reference is not concerned with visual aspects.

Visual aspects, however, are an issue in EP 503 254, where an installation for filling of ice cream is arranged together with addition of fruit pulp in a decorative manner. However, the installation is limited in the possibilities of decoration, mainly because the dosing ducts of the ice cream and the fruity component are not arranged for complete filling of a pot.

WO 0200029 A1 discloses dairy products containing two or more masses, at least one of which is a fermented milk base. WO 0200029A1 mentions that an even or odd number of masses can be used, in case of which all masses meet at a common vertical axis. From the examples it emerges that all masses have about the same importance and are present in about the same weight or volume ratio.

EP 0 928 560 A2 discloses a product having two components that are preferably present in equal weight, but weight-ratios in the range of 17:83-83:17 are mentioned. By the movement of the pot during filling of the two components, the two components may be arranged in different aesthetic forms, such as zig-zag or stripes. There are no further arrangements of the masses disclosed, which could yield other optical appearances.

DE 201 07 374 U1 discloses, in Fig 2, a fruit mass which is arranged annularly along the wall of a pot, while a yoghurt mass is present in the centre. The masses of the yoghurt and the fruit disclose a weight-ratio of about 1:1.
EP 0 800 769 concerns a packed dairy spread including two inhomogeneously combined components (A and B), which are in contact with each other. Regarding the optical appearance obtained by the arrangement of components according to this reference, it is taught that: "components A and B are present in alternating regions, resembling the shape of a grape-fruit or of a small cake". EP 0 800 769 is silent on other optical appearances or distribution of the masses than those mentioned.
EP 0 853 888 A1 relates to a dessert product comprising a milk-based component and a further component, which may give the product a pattern of stripes. The number of stripes as well as their alignment or distribution is not further discussed.
DE 101 26 408 A1 discloses in Figures 1a - 1c the distribution of two components, which form two parts of a dairy product. Since there are only two distinct parts, which are aligned one beside the other, or one within the other, there is only limited variation for appearance and distribution possible.

A package for cheese is disclosed in CH 249 359, wherein different sorts of cheese are put together in a way that soft cheeses are surrounded and thus protected by harder sorts of cheese. The embodiment of Fig. 8 of CH 249 359 corresponds to the optical appearance of EP 0 800 769 ("shape of a grape-fruit"). CH 249 359 does not relate to a dairy product in a pot and visual aspects are not mentioned.

The present invention has as an objective a dairy product in a pot, which comprises lateral stripes of a non-dairy component and which thus creates interesting visual aspect, especially if the pot is transparent.

It is another objective to create dairy products wherein the non-dairy base may be dosed in a way that also ornamentation of the top or even of the bottom of the dairy product in the pot is achieved.

### Summary of the Invention

Remarkably, a installation and method of filling dairy and non-dairy bases into a pot was found that provides so far unknown patterns and coating of dairy bases in pots. These methods include specific co-extrusion dies, movements of the pot or the co-extrusion die during filling and a dosage timing and speed that, altogether, provide for unique dairy products in pots.

Consequently, in a first aspect the present invention provides a dairy product in a pot comprising at least two components, wherein at least one lateral component, which is a non-dairy base, is located at least laterally of a main component, which is a dairy base, characterised in that
- the lateral component forms 5 - 10 stripes, triangles, other forms,
- the lateral component extends from lateral to cover at least partially also the top and/or bottom of the main component and thereby also forms stripes, triangles, other forms on the top and/or the bottom of the main component,
- the ratio by weight between the dairy component and the non-dairy component is in the range of 1:1 to 50:1.

In a further aspect, the present invention provides a process for obtaining the dairy product in a pot according to the invention, which comprises,
- lowering a co-extrusion nozzle into a pot,
- lifting the co-extrusion nozzle from the pot while injecting essentially simultaneously at least one lateral and a main component through the co-extrusion nozzle into the pot,
characterised in that the main component constitutes 60 to 95wt.-% and the at least one lateral component constitutes 5 to 40wt.-% of the totally injected components.

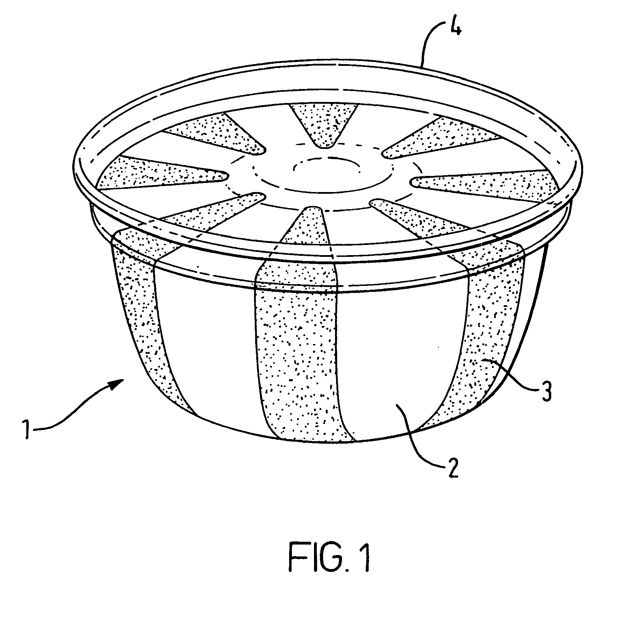

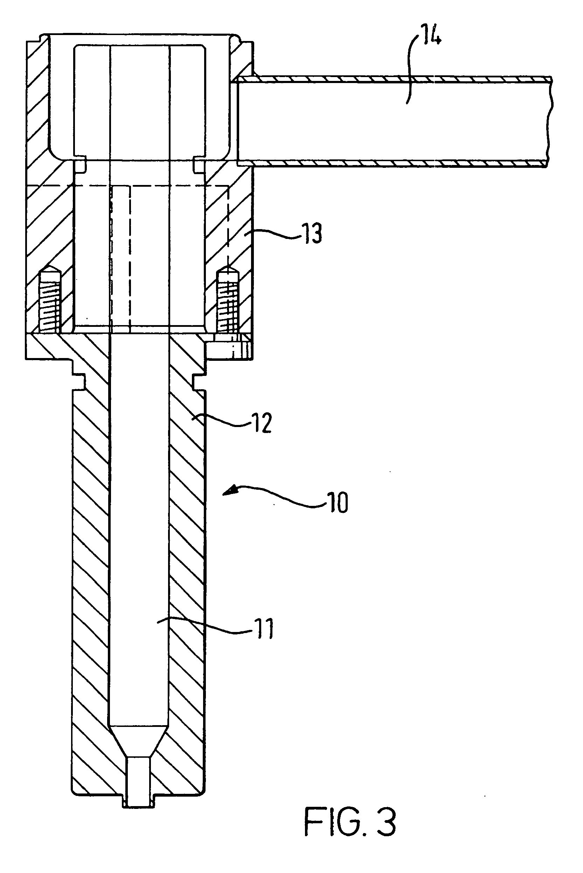

An advantage of the present invention is that it provides novel dairy products as exemplified in Figure 1. Such dairy products have so far not been produced.

Another advantage of the present invention is that it allows lateral ornamentation of dairy bases with non-dairy bases, which creates new visual aspects, such as contrasting stripes or even an entire coating in serving entities ready for consumption.

A further advantage is that the dairy products according to the invention gives a potential consumer to understand what flavour or ingredient is in the pot. This is achieved by providing the dairy product in a pot with transparent side-walls exhibiting the stripes of the non-dairy base.

In the figures, which may serve as an illustration of an embodiment of the present invention
Figure 1 shows the dairy product (1) according to an embodiment of the present invention, wherein a main component (2) is constituted by a dairy base and the lateral stripes (3) are formed by fruit puree. Furthermore, the product is supplied with a transparent pot (4).
Figure 2 A and B shows a nozzle (5) suitable to prepare the product according to the invention. A is a view from lateral exhibiting the central (6) and lateral (7) duct, while B shows the nozzle from below, visualising one central (8) and eight lateral (9) outlet openings for the filling of the different components of the dairy product.
Figure 3 shows another nozzle (12) suitable to inject a central component into the dairy product according to the invention. The nozzle (10) comprises a central duct (11), an injection nozzle (14), a nozzle support (13), and a product inlet (14).

### Detailed Description of the Invention

Within the context of this specification the word "comprises" is taken to mean "includes, among other things". It is not intended to be construed as "consists only of".

In the context of the present invention, the term non-dairy base encompasses, for example, any coloured liquid or semi-liquid food matrix useful for ornamentation. For example, it may be a sauce, like chocolate or caramel sauce, or a fruit-containing base, such as fruit-puree, fruit pulp, fruit syrup, fruit flavoured liquid, semi-liquid or jelly. A non-dairy component, if present, may be selected from the group of the above named bases, and mixtures thereof.

In the context of the present invention, the term "complete coating" refers to a coating that covers either completely the side wall of the dairy product or, in addition, also the top and/or the bottom of the dairy product, depending on the respective embodiment of the invention.

Preferably, other forms are forms that are derived by injecting different amount of the lateral component after the main component has already completely been filled in the pot. The lateral component may form a circle, longish triangles, flower-like shapes, for example.

Preferably, the dairy product is a chilled dairy product. That is a dairy product that will, during its shelf life, be kept at 0 to 6°C, preferably about 4°C, and/or that has a relatively low shelf life (up to 2 months, preferably up to 1 month).

Preferably, the dairy product is a bottom-up filled product.

In another embodiment of the present invention the dairy base is yoghurt, a flan base or a fresh cheese and/or the other component is a fruit-containing or fruit-flavour containing base.

Preferably, the main component corresponds to a dairy base and at least one lateral component corresponds to a non-dairy base. If present within this embodiment, the central component forming a central core (see below) may also be non-dairy.

In yet a further embodiment, the two components are of different colours in a way that a visible contrast between the components is present.

In still another embodiment, the pot according to the present invention is transparent to an extent that at least the colour of the component laterally on the product is visible to an individual looking from outside at the dairy product.

In addition, the pot may comprise, on its lateral walls, for example, bulges or convexities in the form of stripes or bands. Hence, the lateral component of the dairy product may be situated in the bulges or convexities of the pot, thus further accentuating or distinguishing the presence of the stripes.

For example, the diameter (largest vertical diameter of the pot, usually on the top) and the height of the pot are essentially the same. In another example, the pot is higher than broad (height > diameter). In another embodiment, the pot is broader than it is high (diameter > height).

Preferably, the dairy product according to the invention will cover at least 60% of the surface of the side wall of the pot. Preferably, it will cover at least 70%, more preferably at least 80% of the surface of the side wall of the pot.

Preferably, in the embodiment where lateral stripes are present, the dairy product may have 5 to 10, for example 5 to 8, or 6 to 10 lateral stripes.

The dairy product according to the invention comprises at least one dairy component and at least one non-dairy component, the ratio by weight between the dairy and the non-dairy component(s) being in the range from 1:1 to 50:1. Preferably, it is between 2:1 to 20:1, more preferably it is between 3:1 to 10:1, and most preferably it is in the range of 4:1 to 7:1.

Preferably, the viscosity (according to Brookfield, spindle 06, 50 rpm at 11 °C) of the dairy base, whether it forms the central or a lateral component, is in the range of 5000 to 8500cPs, preferably in the range of 6000 to 7500cPs, more preferably 6500 to 7000cPs.

Preferably, the viscosity of an optional non-dairy base, for example a fruit pulp, if selected as an embodiment of the invention, is in the range of 3500 to 6000cPs, preferably in the range of 4000 to 5500cPs, more preferably 4500 to 5000cPs.

The consistency of the dairy base at 20°C measured according to Bostwick for 1 minute, may be in the range of 3 to 9, preferably 4 to 7, and for an optional non-dairy base, for example a fruit pulp, if selected as an embodiment of the invention, in the range of 6 to 15, preferably 9 to 11.

The above data allow determining ratios of viscosity and consistency of different components. The ratios indicated below follow the principle that a difference in viscosity between different components may have the advantage that the components do not mix during the shelf life of the dairy product, and that, therefore, sharp contrasts of colour between the different components persist during shelf life. It is clarified however, that ratios close or equal to 1 are generally not an obstacle to the working of the present invention.

For example the ratio of the Brookfield viscosities between two different components (for example, a dairy / a non-dairy component) may lie between 0.1 to 20, preferably 0.5 to 15, more preferably between 1 to 10 and most preferably between 1.1 and 2.

For example, the ratio of the Bostwick consistencies between two different components (for example, a dairy / a non-dairy component) may lie between 0.001 to 3, preferably between 0.1 to 2 and more preferably between 0.2 to 1.

In yet a further embodiment, the dairy product according to the present invention further comprises, within the main component, a central component, forming a central core of the dairy product.

In an embodiment of the dairy product with a central component, the central component and the lateral component are non-dairy and comprise 20 to 70wt.-% of the dairy product.

Preferably, the central and the lateral component comprise 30 to 60wt.-%, more preferably 40 to 55wt.-% of the totally injected components.

In the context of the processes according to the present invention, it is mentioned that a filling of a pot, whereby a nozzle or die is lowered into the pot and food material is filled in during the lifting of the nozzle or die, is generally referred to as a bottom-up filling process.

In an embodiment of the process according to the invention, the at least one main component (optionally including a central component) constitutes 70 to 93wt.-%, preferably 80 to 90wt.-% of the totally injected components.

Preferably, the process according to the invention provides that the at least one lateral component constitutes 7 to 30 wt.-%, preferably 10 to 20 wt.-% of the totally injected components, for example.

For example, the step of injecting the at least one lateral component may start slightly before the injecting of the main component.

In addition, or alternatively, the step of injecting the at least one lateral component is continued after the injecting of the main component has already been completed.

The time delays indicated as given above as "slightly before" or "continued" are generally in the range of 0.001 to 1s, preferably in the range of 0.05 to 0.3s.

As a possible variation of the process according to the invention, the nozzle may be swirled when it is lifted, to the end that the stripes are sloped or skew with respect to the horizontal of the dairy product.

In the embodiments of the process according to the invention, where a central component forms a central core of the dairy product, the lateral and the central component may constitute 35 to 55wt.-%, preferably 40 to 50wt.-% of the total dairy product, and the main component may constitute 65 to 45wt.-%, preferably 60 to 40wt.-% of the dairy product.

In order to work the present invention, a suitable filling device may be selected. The filling device preferably comprises a nozzle with several ducts or tubes, which allow for independent but simultaneously controlled filling of different components into a pot.

For example, a suitable filling device may comprise a nozzle that is capable of being introduced into a pot and injecting the different components of the dairy product through different ducts while retracting from the pot, for example (bottom-up filling).

Furthermore, the filling device may be capable of controlling independently the following parameters during the filling process: the amount of different components to be filled into a single pot, filling speed, starting time of the filling of a particular component, end time of the filling, opening time and/or size of the nozzle, closing time and/or size of the nozzle, for example.

Similarly, the nozzle that may lowered into and retract from the pot may be controlled: In particular, the distance that the nozzle will be lowered (how deep into the pot), the speed of the penetration, the speed of the retraction, for example.

Furthermore, the nozzle may comprise ducts that are arranged in a way that the visual aspects of the present invention are actually achieved. For example, the nozzle comprises a central duct, surrounded by several lateral ducts. Preferably, the number of the lateral ducts is in the range of 3 to 24, more preferably 4 to 12, even more preferably 6 to 8 ducts. For example, the opening of the central and the lateral ducts is simply a circular hole.

Generally, the lateral ducts will be smaller than the central duct, mostly because the lateral component or components, to be filled in by the lateral ducts, are usually present in smaller quantities than the main component.

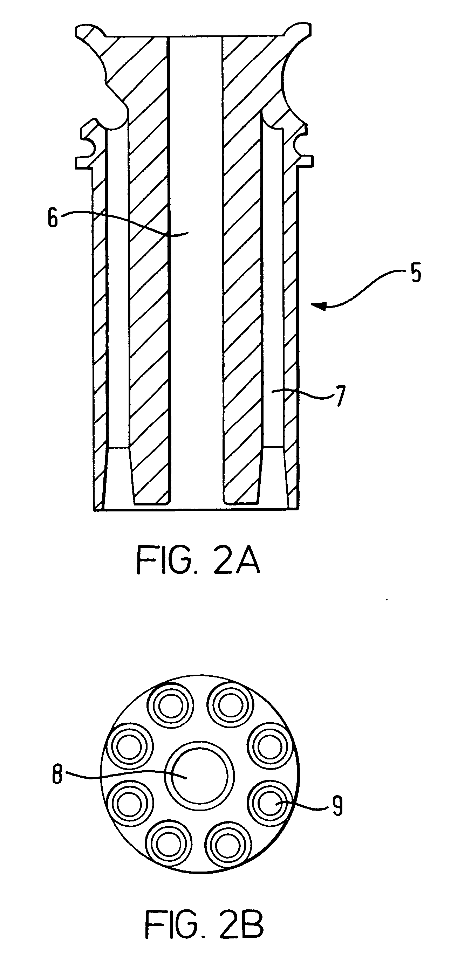

An example of a filling device suitable to prepare the dairy product according to the present invention is disclosed in FR 2 708 563. Figures 2 to 3 of FR 2 708 563 in particular show a nozzle that comprises a central duct (Nr. 33) and eight lateral ducts (Nr. 36) of a smaller diameter.

The dairy product according to the present invention comprises a pot. Such a pot may be selected to provide an optimal serving size for a dairy product. Hence, a pot may include a volume of 0.3dl to 1L. Preferably, it will include a volume of 0.4dl to 5dl, more preferably 0.5dl to 2.5dl. For example, a pot according to the invention includes a volume of 0.6 to 2dl.

Pots, containers, mugs and/or cups according to the invention may be selected from any pot commonly used for chilled dairy products, such as yoghurts or fresh cheese, for example. These pots are usually made of polystyrene (PS), polypropylene (PP), polyester (PET) or of glass.

According to a preferred embodiment, the pot according to the invention may be substantially transparent, thus displaying the pattern of colours generated with the different components of the dairy product. In particular, the lateral walls of the pot may be transparent.

Similarly, the pot will not be supplied with a non-transparent label that covers the lateral surface of the pot entirely. Hence, if a label is attached, it will be sufficiently small to exhibit, through the transparent walls of the pot, the colours of stripes and/or coating of the dairy product. Alternatively, in order to visualise the colour contrasts in the pot, a transparent label or sticker may be used.

According to the invention, at least one component of the dairy product is a dairy base. The base may be selected from the group of yoghurt, flan base, fresh cheese mixtures thereof or ice cream.

For example, two or more components of the dairy product may be dairy bases as those listed above. Visual aspects may then be generated by different colours of the different dairy bases.

Alternatively, at least one component may be a dairy base and another component may be a non-dairy base. The non-dairy base may be selected from the group of fruit pulp, fruit puree, fruit syrup, fruit flavour containing syrups, coloured, liquid, semi-liquid or jelly food matrixes and mixtures thereof, for example.

Notably, there is not a strict criterion for the nature of the non-dairy component, but that it preferably has a different colour than the mandatory dairy base. While fruit-based or fruit-flavour comprising components are frequently chosen to be combined with dairy bases, this need not necessarily be so. For example, sauces such as chocolate sauce, caramel sauce and so forth are equally suitable.

The present invention relates to all dairy products comprising components wherein at least one component is a dairy base, and at least one component is situated laterally of a main component.

In a straightforward approach, a dairy product in this sense may consist of a central dairy base, which forms the main component, and lateral stripes, of fruit pulp, for example. If the dairy product is white and the fruit pulp red, yellow or orange, a product with an appealing visual aspect may be obtained.

This concept may be further developed by two non-dairy components (fruit pulp, for example) that form different lateral stripes and a dairy base, which forms the main component. In so doing, a dairy product with a dairy core and lateral stripes of different colours may be obtained. For example, fruit pulp of strawberries and apricots may be selected to form lateral stripes in red and orange or yellow colour, respectively.

Alternatively, two dairy bases may be used, wherein one dairy base will form the lateral component (lateral stripes) and another dairy base will form the main component. Likewise, two dairy bases may be combined with a non-dairy base, wherein the two dairy bases form lateral stripes and the non-dairy base forms a central component.

If two (or more) lateral components are used, they may be arranged in alternating colours. In the embodiment, where the main component is totally coated by the lateral component, and if a transparent pot, it is thus possible that, from lateral, only the different colours of alternating lateral components are visible, while the main component, for example a dairy base, is completely hidden.

It is possible, furthermore, that the main component itself comprises an additional core (for example, a central component). For example, if the main component is the dairy base and the lateral component is constituted of fruit pulp or chocolate, it is also possible to further introduce fruit pulp or chocolate forming a central component.

The central component may extend vertically in the centre of the pot from the bottom to the top, for example, within a dairy base. The central component may also have a ball-like form within the main component.

The central component may be visible from the top of the dairy product, forming a circle that remains after injection of the central component.

In the embodiment wherein a central component (central core) is injected into the main component, the central component may be a dairy or a non-dairy base as given above.

Preferably, the central component may be a non-dairy base. For example, the lateral component and the central component may be the same or different non-dairy bases as mentioned above. For example, the lateral and the central component may be different or the same fruit puree.

In conclusion, all sorts of variations may be conceived in the combination of only dairy components and/or dairy and non-dairy components.

In addition, the stripes that are located laterally and that are constituted by the lateral component need not necessarily extend totally vertically from the bottom to the top. The stripes may form s-shaped lines, sloping lines or even interrupted (dashed) or zigzag lines. These forms may be obtained by turning accordingly the pot and/or the nozzle during the filling process.

For example, if a dairy product in a pot of 60 to 200ml is produced with 6 to 8 lateral, vertically extending stripes consisting of fruit pulp and a main component consisting of a dairy base is to be manufactured, one may proceed as follows:

A filling device as disclosed in FR 2 708 563 (manufactured by ERCA, France) is used, which comprises a nozzle with one central and 6 to 8 lateral ducts. The lateral component may be inserted via 6 to 8 relatively smaller lateral ducts of the nozzle, while the central dairy base may be inserted via a relatively larger central duct. The two components are stored, prior to insertion, in two separate containers.

The filling volume of the main component (a dairy base, for example) per pot may be adjusted to the size of the pot. In an 80ml pot, for example, the main component may comprise 40 to 75cm³, preferably 50 to 60 cm³.

In a 200ml pot, for example, the main component may comprise 100 to 180cm³, preferably 130 to 150 cm³.

The filling volume of the lateral component (a non-dairy base such as fruit pulp, for example), in a 80ml pot, for example, may be adjusted to 5 to 40cm³, preferably 10 to 30cm³, more preferably 8 to 20cm³.

The speed of injection of the main component may be adjusted to 1'000 to 45'000 imp/s (impulses per second, 46'080 imp/s correspond to 2'700 rpm [rounds per minute]), preferably 10'000 to 40'000 imp/s, more preferably 15'000 to 30'000 imp/s. This speed depends on the relative amount of the filling volume of the main component to the lateral component and on the product characteristic.

The speed of injection of the lateral component may be adjusted to 500 to 20'000imp/s, preferably 1'000 to 8'000imp/s, more preferably 3'000 to 5'000imp/s.

If it is intended to have the lateral stripes extending to the top of the dairy product, it is further recommended to start with the filling of the fruit pulp a little bit later. Hence, the time delay of the filling of the lateral with respect to the main component may amount to up to 1s, preferably 0.05 to 0.5s, more preferably 0.07 to 0.2s.

Alternatively, the lateral component may be started with, the main component being delayed. In this later case, the stripes will extend to the bottom of the dairy product.

It may also be wished that the lateral component extends to the bottom and to the top of the dairy product. In this case, the lateral component is started to be filled a little earlier and the parameters and/or amounts of components are chosen in a way that the filling machine still is about to fill the lateral component, while the main component has already completely been filled into the pot.

As an advancement of the lateral component extending to the bottom and to the top, also a complete coating of the main component by the lateral component may be achieved. This may be done, for example, by using a nozzle with additional lateral ducts, for example 6 to 24, preferably 8 to 16 lateral ducts. In so doing, neighbouring stripes will merge during the filling process and form a complete coating. Alternatively or simultaneously, a complete coating may be achieved by using higher amounts of the lateral component and by adjusting the filling parameters. Generally, the same time intervals with respect to delayed and/or early filling as indicated above should be sufficient to achieve a complete coating.

Hence, if the filling of the pot is started with the lateral component, the main component is therefore arriving in the pot slightly delayed. Further, the filling process is ended with the lateral component, that is, the main component must already have been filled when the lateral component is still being filled.

Further parameters to be adjusted are the course of the nozzle, that is the distance and the speed at which the nozzle is lowered and lifted during the filling process of course, these are strongly variable parameters, that depend on the filling volume, and further on the shape and the length of the pot.

For example, resuming the filling of a dairy product in a pot of 60 to 200ml comprising 6 to 8 lateral stripes, the total lowering and lifting distance may be adjusted to 1 to 10cm, preferably 2 to 7cm, more preferably 3 to 6cm.

The speed of lifting the nozzle during the filling procedure may be adjusted to 1'000 to 45'000 imp/s, preferably 1'000 to 10'000imp/s, more preferably 2'000 to 5'000imp/s.

Dairy products with more (up to 24, for example) or less (2 to 4, for example) stripes are manufactured according to the above principles, including variations in the number of lateral ducts of the nozzle of the filling device. The skilled person is able to perform these variations.

It is of utmost importance to note that all of the above-indicated ranges are ranges that may be substantially modified while still obtaining a product according to the invention. This is so, because different parameters may outbalance other parameters. For example, the injecting speed of any component may be slowed down remarkably, if at the same time the lifting speed of the nozzle is reduced.

Similarly, the time-delay of the start of the filling, if any, may be substantially increased, if the injecting speed is generally slowed down. Inverse arguments hold true if the overall speed is increased; in this case the time-delay may be reduced substantially.

As another example, if stripes extending to the top of the product are desired, this may not only be achieved by delaying the start of the filling of the lateral component, but also by just adding a higher amount of the lateral component. In this case, at the moment the main component is already filled, there still will be material of the lateral component to be filled. A similar result is achieved if the speed of injection of the lateral component is just slowed down. Also in this later case, a delayed starting of filling may prove to be not necessary to obtain stripes that extend to the top of the product.

In embodiments wherein a central component is present, the nozzle (12) of Figure 4 may be used.

The nozzle (12) is simply placed directly above the dairy product comprising stripes or a complete coating. Then the central component is injected, from above, into the dairy product.

In a pot of 90cm³, for example, about 20 to 40cm³ of the central component may be injected.

For example, the central component may amount to 20 to 40wt.-%, preferably 25 to 35wt.-% of the entire dairy product.

The injection speed may be in the range of 20'000 to 50'000imp/s, preferably 35'000 to 42'000imp/s.

If the central component is a non-dairy base, for example a fruit puree or pulp, it preferably does not comprises fruit pieces that have a diameter >1cm in, preferably not >0.5cm, in order to allow for injection by a relatively narrow nozzle (0.3 to 1cm, for example).

The following examples are given by way of illustration only and in no way should be construed as limiting the subject matter of the present application.

### Example 1: Preparation of a Dairy Product with Stripes

A dairy product of 170g comprising a dairy base like a fresh cheese (150g), which forms a main component, and puree of strawberry (20g) forming 8 lateral stripes extending to the top of the product is produced (Figure 1).

The filling device is purchased from ERCA, France and corresponds to the device disclosed in FR 2 708 563. The nozzle used for the filling of a transparent pot is given in Figure 3.

The filling parameters for the filling per individual pot are given, for each component, in Table 1 below:

**Table 1: Filling and product parameters of a dairy product with stripes.**

| | Puree of strawberry | Dairy base |
|---|---|---|
| Filling weight per pot (g) | 20 | 150 |
| Speed of injection (Imp/s) | 20'000 | 15'000 |
| Speed or refilling of the dosing units (Imp/s) | 10'000 | 10'000 |
| Start time of filling (s) | 0 | 0.1 |

The ratio of the Brookfield-viscosity (dairy base/puree of fruit) is 1.4, and the ratio of the Bostwick-consistency of the two components is 0.5.

### Example 2: Preparation of a Coated Dairy Product

A dairy product of 150g comprising a dairy like a fresh cheese (110g), which forms a main component, and puree of strawberry (40g) forming a complete coating of the dairy base is produced.

The same filling device as indicated in Example 1 is used, whereby the nozzle is exchanged with a nozzle comprising 20 lateral ducts and openings.

The filling parameters for the filling per individual pot are given, for each component, in Table 2 below:

**Table 2: Filling and product parameters of a coated dairy product.**

| | Puree of strawberry | Dairy base |
|---|---|---|
| Filling weight per pot (g) | 40 | 110 |
| Speed of injection (Imp/s) | 10'000 | 15'000 |
| Speed or refilling of the dosing units (Imp/s) | 10'000 | 10'000 |
| Start time of filling (s) | 0 | 0.15 |

### Example 3: Dairy Product Comprising Stripes and a Central Core

The product of Example 1 is further processed by injecting a central component forming a central core.

Hence, the product of Example 1 is transferred below a special nozzle having an injection diameter of 0.5cm (see Figure 3). The nozzle is lowered onto the centre of the dairy main component and 50 g of strawberry puree is injected into the product at a speed of 40'000imp/s.

As a result, a dairy product is obtained, comprising a dairy base covered laterally and by vertical stripes and comprising, as a central component, a central core of fruit puree.

## Claims

1. A dairy product in a pot comprising at least two components, wherein at least one lateral component, which is a non-dairy base is located at least laterally of a main component, which is a dairy base, **characterised in that**
- the lateral component forms 5-10 stripes, triangles, other forms,
- the lateral component extends from lateral to cover at least partially also the top and/or to the bottom of the main component and thereby also forms stripes, triangles, other forms on the top and/or the bottom of the main component,
- the ratio by weight between the dairy component and the non-dairy component is in the range of 1:1 to 50:1.

2. The dairy product according to claim 1, wherein the dairy base is yoghurt, a flan base or a fresh cheese and/or the other component is a fruit-containing or fruit-flavor containing base.

3. The dairy product according to claim 1 or 2, wherein the two components are of different colours in a way that a visible contrast between the components is present.

4. The dairy product according to any of claims 1 to 3, wherein the pot is transparent to an extent that at least the colour of the component laterally on the product is visible to an individual looking from outside at the dairy product.

5. The dairy product according to any of claims 1 to 4, further comprising, within the main component, a central component, forming a central core of the dairy product.

6. The dairy product according to claim 5, wherein the central component and the lateral component are non-dairy and comprise 20 to 70wt.-% of the dairy product.

7. A process for obtaining the dairy product in a pot according to any of claims 1 to 6, which comprises the steps of lowering a co-extrusion nozzle comprising a central nozzle surrounded by up to 24 lateral ducts into a pot, lifting the co-extrusion nozzle from the pot while at essentially simultaneously injecting at least one lateral and a main component through the co-extrusion nozzle into the pot, **characterised in that** the main component constitutes 60 to 95wt.-% and the at least one lateral component constitutes 5 to 40wt.-% of the totally injected components.

8. The process according to claim 7, **characterised by** the further step of injecting, into the main component, a central component forming a central core of the dairy product.

## Patentansprüche

1. Molkereiprodukt in einem Becher, das wenigstens zwei Komponenten aufweist, wobei wenigstens eine seitliche Komponente, die eine Grundzusammensetzung auf Nicht-Milch-Basis ist, wenigstens seitlich einer Hauptkomponente angeordnet ist, die eine Grundzusammensetzung auf Milchbasis ist, **dadurch gekennzeichnet, daß**
- die seitliche Komponente 5 bis 10 Streifen, Dreiecke, andere Formen bildet,
- die seitliche Komponeten sich von der Seite her so erstreckt, dass sie wenigstens teilweise auch die Oberseite und/oder den Boden der Hauptkomponente bedeckt und **dadurch** Streifen, Dreiecke, andere Formen auch auf der Oberseite und/oder dem Boden der Hauptkomponente bildet,
- das Gewichtsverhältnis zwischen der Komponente auf Milchbasis und der Nicht-Milch-Komponente im Bereich von 1:1 bis 50:1 liegt.

2. Molkereiprodukte nach Anspruch 1, wobei der Grundbestandteil auf Milchbasis Joghurt, eine Flan-Grundlage oder ein Frischkäse ist und/oder die andere Komponente ein fruchthaltiger oder ein Fruchtaroma enthaltender Grundbestandteil ist.

3. Molkereiprodukt nach Anspruch 1 oder 2, wobei die zwei Komponenten auf eine solche Weise unterschiedliche Farben aufweisen, daß ein sichtbarer Kontrast zwischen den Komponenten existiert.

4. Molkereiprodukt nach einem der Ansprüche 1 bis 3, wobei der Becher in einem solchen Ausmaß durchsichtig ist, daß wenigstens die Farbe der Komponente, die sich in seitlicher Anordnung an dem Produkt befindet, für eine Person sichtbar ist, die von außen auf das Molkereiprodukt schaut.

5. Molkereiprodukt nach einem der Ansprüche 1 bis 4, das außerdem, innerhalb der Hauptkomponente, eine zentrale Komponente aufweist, die einen zentralen Kern des Molkereiprodukts bildet.

6. Molkereiprodukt nach Anspruch 5, wobei die zentrale Komponente und die seitliche Komponente keine Komponenten auf Milchbasis sind und 20 bis 70 Gew.-% des Molkereiprodukts bilden.

7. Verfahren zur Erzeugung des Molkereiprodukts in einem Becher nach irgendeinem der Ansprüche 1 bis 6, das die Stufen der Absenkung einer Koextrusionsdüse, die eine zentrale Düse aufweist, die von bis zu 24 seitlichen Zuleitungen umgeben ist, in einen Becher, das Anheben der Extrusionsdüse aus dem Becher, während man im wesentlichen gleichzeitig wenigstens eine seitliche und eine Hauptkomponente durch die Koextrusionsdüse in den Becher injiziert, umfaßt, **dadurch gekennzeichnet, daß** die Hauptkomponente 60 bis 95 Gew.-% und die wenigstens eine seitliche Komponente 5 bis 40 Gew.-% aller injizierten Komponenten ausmachen.

8. Verfahren nach Anspruch 7, **gekennzeichnet durch** die weitere Stufe des Injizierens einer zentralen Komponente, die einen zentralen Kern des Molkereiprodukts bildet, in die Hauptkomponente.

## Revendications

1. Produit laitier dans un pot comprenant au moins deux composants, dans lequel au moins un composant latéral, qui est une base non laitière, est situé au moins latéralement par rapport à un composant principal, qui est une base laitière, **caractérisé en ce que**
- le composant latéral forme 5 à 10 raies, triangles, autres formes,
- le composant latéral s'étend depuis les côtés pour recouvrir, au moins en partie, également le sommet et/ou le fond du composant principal et forme donc également des raies, triangles, autres formes, sur le sommet et/ou le fond du composant principal,
- le rapport en poids entre le composant laitier et le composant non laitier est dans la plage de 1:1 à 50:1.

2. Produit laitier selon la revendication 1, dans lequel la base laitière est du yoghourt, une base de flan ou un fromage frais et/ou l'autre composant est une base contenant des fruits ou contenant des arômes de fruits.

3. Produit laitier selon la revendication 1 ou 2, dans lequel les deux composants sont de couleurs différentes de manière qu'un contraste visible entre les composants soit créé.

4. Produit laitier selon l'une quelconque des revendications 1 à 3, dans lequel le pot est transparent au point qu'au moins la couleur du composant latéralement sur le produit est visible pour un individu regardant le produit laitier depuis l'extérieur.

5. Produit laitier selon l'une quelconque des revendications 1 à 4, comprenant en outre, au sein du composant principal, un composant central formant un coeur central du produit laitier.

6. Produit laitier selon la revendication 5, dans lequel le composant central et le composant latéral sont non laitiers et comprennent de 20 à 70 % en poids du produit laitier.

7. Procédé pour obtenir le produit laitier dans un pot selon l'une quelconque des revendications 1 à 6, qui comprend les étapes d'abaissement d'une buse de co-extrusion comprenant une buse centrale entourée par jusqu'à 24 conduits latéraux dans un pot, de levage de la buse de coextrusion du pot tout en injectant sensiblement simultanément au moins un composant latéral et un composant principal via la buse de coextrusion dans le pot, **caractérisé en ce que** le composant principal constitue de 60 à 95 % en poids et l'au moins un composant latéral constitue de 5 à 40 % en poids des composants injectés au total.

8. Procédé selon la revendication 7, **caractérisé par** l'étape supplémentaire d'injection, dans le composant principal, d'un composant central formant un coeur central du produit laitier.
